Europäisches Patentamt

European Patent Office

Office européen des brevets

(11) Numéro de publication: **0 421 181 A1**

## (12) DEMANDE DE BREVET EUROPEEN

(21) Numéro de dépôt: **90117902.8**

(22) Date de dépôt: **18.09.90**

(51) Int. Cl.5: **G03H 1/02, B44B 5/00, B44B 5/02**

(30) Priorité: **04.10.89 CH 3626/89**

(43) Date de publication de la demande:
**10.04.91 Bulletin 91/15**

(84) Etats contractants désignés:
**AT BE CH DE DK ES FR GB GR IT LI LU NL SE**

(71) Demandeur: **PAMP S.A.**

**CH-6874 Castel S. Pietro (TI)(CH)**

(72) Inventeur: **Barkhordar, Mehdi**
**9, rue Beauregard**
**CH-1204 Geneve(CH)**

(74) Mandataire: **Micheli & Cie**
**Rue de Genève 122, Case Postale 61**
**CH-1226 Genève-Thonex(CH)**

(54) **Procédé pour la réalisation d'un décor holographique sur un article métallique et outil pour la mise en oeuvre de ce procédé.**

(57) On réalise un décor holographique sur un article métallique, par exemple en or ou en argent, en reproduisant une image en micro-relief sur une surface de cet article directement par étampage à température ambiante, ce microrelief étant tel qu'il puisse être observé en lumière blanche sous la forme d'un hologramme. Un outil d'étampage pour la mise en oeuvre de ce procédé comporte sur la face libre d'étampage un film métallique présentant l'image holographique souhaitée en négatif, ce film métallique étant fixé de manière amovible.

## PROCEDE POUR LA REALISATION D'UN DECOR HOLOGRAPHIQUE SUR UN ARTICLE METALLIQUE ET OUTIL POUR LA MISE EN OEUVRE DE CE PROCEDE

La présente invention concerne un procédé pour la réalisation d'un décor holographique sur une surface plane d'un article en un métal mou, notamment un métal précieux ou en un alliage à base de métal précieux; cette invention se rapporte également à un article métallique muni d'un décor holographique obtenu par ce procédé, ainsi qu'à un outil pour la mise en oeuvre dudit procédé.

Il est déjà connu de réaliser des cartes postales ou des cartes d'identification ou de crédit munies d'une image apparaissant en relief, du type hologramme, par des procédés tels que ceux décrits par exemple dans les brevets FR 2 615 450 et US 4 597 814. Selon les procédés actuellement connus, on fixe sur un support approprié, par exemple par collage à chaud ou par thermoformage entre deux couches de matériau plastique adhésif, un film mince métallique ou plastique sur lequel l'image holographique en relief a préalablement été formée par des techniques également connues (procédé photo-resist, électroformage, utilisation d'un bain électrolytique sur la surface d'une matrice photographique, etc).

Or, de tels procédés dans lesquels une image holographique en relief est fixée sur une surface se sont révélés inappropriés pour munir un article métallique d'un décor holographique, surtout dans le cas d'articles en métalprécieux (or ou argent par exemple) qui, indépendamment du problème technique de l'adhésion sur le métal, se trouvent être dépréciés par la présence d'un élément rapporté en un métal non précieux (par ex. Ni) ou en matière plastique.

Après de nombreuses recherches infructueuses pour tenter d'adapter les procédés connus à la réalisation d'un image holographique sur un article métallique, et d'une manière inattendue allant même à l'encontre des préjugés en la matière des hommes du métier consultés, il a été démontré qu'il était possible d'atteindre le but recherché par une simple opération d'étampage à froid directement sur une surface de préférence plane et lisse de l'article.

Ainsi, un premier objet de la présente invention consiste en un procédé pour la réalisation d'un décor holographique sur un article métallique, qui est tel que défini dans la revendication 1.

Un second objet de l'invention est constitué par un article métallique muni d'un décor holographique obtenu par le procédé selon l'invention, et un troisième objet de cette invention est constitué par un outil pour la mise en oeuvre dudit procédé, qui présente les caractéristiques énoncées dans la revendication 8.

Dans la présente description, on entend par décor holographique toute représentation figurative ou non, des chiffres, lettres, etc, pouvant être utilisés à titre purement esthétique ou comme moyen d'identification. De plus, par article métallique, il faut entendre ici des articles massifs en un métal mou ou en un alliage à base de métal mou, de préférence en métal précieux, tel que or, argent ou platine; les articles ont généralement une forme plate soit circulaire (pièces, médailles), soit rectangulaire (petits lingots, plaquettes d'identification, etc).

L'invention sera maintenant illustrée par l'exemple suivant.

On forme tout d'abord, de manière connue en soi, une ébauche par laminage d'un lingot, par exemple en or ou en argent, à l'épaisseur voulue, puis par découpage de la forme désirée, par exemple une plaquette rectangulaire sur ou pièce circulaire.

De préférence, on soumet ensuite la surface sur laquelle le décor holographique doit être reproduit à un traitement mécanique, chimique ou électrochimique ou autre, connu en soi, pour conférer à cette surface l'aspect d'un miroir.

La surface miroir de l'ébauche métallique est alors soumise à une opération d'étampage à température ambiante avec un outil d'étampage spécial dont la face d'étampage est munie d'un film métallique sur lequel le décor holographique a été préalablement formé en négatif. La pression d'étampage est ajustée, de manière connue en soi, en fonction de la surface étampée; elle peut être par exemple comprise entre quelques dizaines à plusieurs centaines de kg/cm2 pendant quelques secondes à une dizaine de secondes.

On obtient ainsi par étampage à froid directement sur une surface de l'article métallique une image en relief, qui peut être observée par réflexion en lumière blanche naturelle ou artificielle sous la forme d'un hologramme. Cette image holographique présente par diffraction de la lumière et selon son orientation par rapport à la source de lumière une ou plusieurs couleurs. Selon sa réalisation, elle peut présenter différents aspects quand on la regarde de droite à gauche et vice-versa; elle peut également être réelle, c'est-à-dire apparaissant en trois dimensions en avant de la surface de l'article, soit virtuelle (en arrière de cette surface), ou encore semi-réelle (combinaison des deux effets précédents).

En ce qui concerne l'outil d'étampage généralement en acier, il est donc muni sur sa face libre d'étampage d'un film métallique, fixé de manière amovible ou non, et qui est réalisé par des techniques connues comme mentionné dans la partie introductive. Il peut être en nickel ou alliage de nickel, et comporte une série d'images en microrelief superposés formant en négatif l'image qui doit être reproduite par étampage directement sur la surface de l'article métallique à décorer. De préférence, la surface du film métallique servant de matrice munie de l'image en relief est en outre soumise à un traitement de durcissement, par exemple par revêtement avec matériau métallique plus dur. En pratique, le film métallique que présente la face d'étampage de l'outil peut avoir une épaisseur d'environ 30 à 100 microns, alors que le micro-relief est d'environ 1 à environ 10 microns.

Selon une variante, ce film-matrice peut être posé directement sur l'article métallique, la face munie du micro-relief contre la surface miroir à décorer, et un outil d'étampage classique utilisé comme décrit précédemment.

Ainsi, avec le procédé selon l'invention, on peut obtenir des articles métalliques, plus particulièrement des pièces, médailles en plaquettes en métal précieux, qui présentent sur une de leurs faces au moins un décor holographique leur conférant un aspect esthétique original, dû notamment à la diffraction de la lumière. De même, on peut obtenir comme décor holographique des signes, chiffres, lettres de référence permettant d'identifier ces articles et de les distinguer d'autres articles analogues.

## Revendications

1. Procédé pour la réalisation d'un décor holographique sur un article métallique, caractérisé par le fait qu'on reproduit une image en micro-relief sur une surface de cet article directement par étampage à température ambiante, ce micro-relief étant tel qu'il puisse être observé en lumière blanche sous la forme d'un hologramme.

2. Procédé selon la revendication 1, caractérisé par le fait que l'image holographique en micro-relief est préalablement formée en négatif sur un film métallique utilisé comme matrice d'étampage.

3. Procédé selon la revendication 2, caractérisé par le fait que le film métallique servant de matrice d'étampage est disposé sur la surface de l'article métallique et qu'un outil d'étampage conventionnel est utilisé.

4. Procédé selon la revendication 2, caractérisé par le fait que le film métallique servant de matrice d'étampage est fixé à l'extrémité libre d'un outil d'étampage.

5. Procédé selon l'une des revendications 1 à 4, caractérisé par le fait que l'étampage de l'image holographique est effectué sur une surface de l'article métallique à décorer qui présente l'aspect d'un miroir.

6. Article métallique muni d'un décor holographique obtenu par le procédé selon l'une des revendications 1 à 5.

7. Article métallique selon la revendication 6, caractérisé par le fait qu'il est en un métal mou, par exemple un métal précieux ou un alliage à base de métal précieux.

8. Outil d'étampage pour la mise en oeuvre du procédé selon la revendication 1, caractérisé par le fait que sa face libre destinée à venir en contact avec la surface à étamper est munie d'un film métallique présentant une image holographique en micro-relief.

9. Outil d'étampage selon la revendication 8, caractérisé par le fait que le film métallique est fixé de manière amovible.

10. Outil d'étampage selon la revendication 8 ou la renvendication 9, caractérisé par le fait que le film est en nickel et son épaisseur comprise environ entre 30 et 100 microns, par le fait que le micro-relief de l'image holographique est d'environ 1 à 10 microns, et par le fait que ledit relief est recouvert d'un revêtement en un métal dur.

**Office européen
des brevets**

**RAPPORT DE RECHERCHE
EUROPEENNE**

Numéro de la demande

**EP 90 11 7902**

## DOCUMENTS CONSIDERES COMME PERTINENTS

| Catégorie | Citation du document avec Indication, en cas de besoin, des parties pertinentes | Revendication concernée | CLASSEMENT DE LA DEMANDE (Int. Cl.5) |
|---|---|---|---|
| X | EP-A-0 297 764   (METAL CLOSURES GROUP PLC) <br> * Le document en entier * <br> — — — | 1,2,4-10 | G 03 H <br> 1/02 <br> B 44 B 5/00 <br> B 44 B 5/02 |
| X | US-A-4 725 111   (E.H. WEITZEN et al.) <br> * Le document en entier * <br> — — — | 1,5-7 | |
| Y | | 2-4,8-10 | |
| Y | EP-A-0 113 823   (K. HELD) <br> * Page 15, lignes 17-27; revendication 13 * <br> — — — | 2,3 | |
| Y | DE-A-3 705 552   (P. FUNKE) <br> * Abrégé * <br> — — — | 2,4,8-10 | |
| A | US-A-3 619 024   (J.R. FRATTAROLA) <br> * Abrégé; colonne 3, lignes 20-24; figure 6 * <br> — — — | 3 | |
| A | US-A-3 758 649   (J.R. FRATTAROLA) <br> * Abrégé * <br> — — — | 10 | |
| D,A | FR-A-2 615 450   (SARL EDITION DES GRAVILLIERS) <br> * Le document en entier * <br> — — — | 1,6 | **DOMAINES TECHNIQUES RECHERCHES (Int. Cl.5)** |
| D,A | US-A-4 597 814   (G. COLGATE, Jr.) <br> * Revendications 1,2 * <br> — — — — — | 1,6 | G 03 H <br> B 44 B |

Le présent rapport de recherche a été établi pour toutes les revendications

| Lieu de la recherche | Date d'achèvement de la recherche | Examinateur |
|---|---|---|
| La Haye | 07 décembre 90 | MOET H.J.K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

 

& : membre de la même famille, document correspondant